# DEMANDE DE BREVET EUROPEEN

(11) **EP 0 581 706 A1**
(43) Date de publication de la demande: **02.02.1994**
(21) Numéro de dépôt: 93420328.2
(22) Date de dépôt: 28.07.1993
(51) Int. Cl.: C05B 5/00, C05D 3/04, C05F 7/00, C05G 1/00, C05D 9/00, C05D 3/00

(54) **Engrais agricole et son procédé de fabrication**

(30) Priorité: 29.07.1992 FR 9209729
(71) Demandeur: AFE METAL (Société Anonyme), F-42110 Feurs (FR)
(72) Inventeur: Picard, Lyonel, 42110 Feurs (FR); Mann, Patrick, 26120 La Baume Cornillane (FR)
(74) Mandataire: Dupuis, François

(57) **Abrégé**

L'engrais est formé de laitiers et de boues d'épuration. Les laitiers sont soumis à une opération de broyage et de concassage pour séparer le métal desdits laitiers, lesquels sont ensuite transformés sous forme de granulés.

Les boues d'épuration et les laitiers, sous forme de granulés, sont soumis à une opération de malaxage.

Les laitiers pevent être remplacés par un mélange de poussières de sablerie et de chaux.

## Description

Le problème que se propose de résoudre l'invention est d'obtenir un engrais agricole à partir de boues de stations d'épuration.

Il est déjà connu d'utiliser des boues d'épuration pour constituer des engrais, notamment des engrais agricoles. Pour conférer aux boues une siccité suffisante pour les rendre stockables et transportables, de la chaux est rajoutée et mélangée auxdites boues. Si les résultats obtenus peuvent être considérés comme satisfaisants, les engrais ainsi réalisés représentent un certain coût de revient, compte-tenu de la nécessité de mélanger les boues d'épuration avec de la chaux. Or, la chaux est un produit relativement noble, d'un coût non négligeable.

L'invention s'est fixée pour but de remédier à ces inconvénients, de manière simple, sûre, efficace et rationnelle.

Le problème que se propose de résoudre l'invention est d'obtenir des engrais agricoles en mélangeant aux boues d'épuration des produits, qui, à ce jour,sont généralement mis à la décharge et dont les caractéristiques permettent de remplacer en totalité ou en partie, la fonction remplie par la chaux.

Dans une première forme de réalisation, les produits sont constitués par des laitiers de fusion qui sont, de manière connue, des ensembles de matières vitreuses qui se forment à la surface des métaux en fusion et qui rassemblent les impuretés provenant de la gangue des minerais.

Dans ces conditions, selon une première caractéristique à la base de l'invention, l'engrais comprend une quantité déterminée de laitiers et une quantité déterminée de boues d'épuration.

Il apparait que le laitier remplace avantageusement la chaux, pour donner la siccité suffisante aux boues d'épuration. L'engrais obtenu, outre ses qualités nutritiques, est d'un coût de revient quasiment nul, étant donné que les deux produits de base, à savoir le laitier et les boues d'épuration, sont l'un et l'autre,des produits de récupération qui, généralement, ne sont pas réutilisés. C'est le cas notamment des laitiers.

Avantageusement, l'engrais comprend 50 % de laitier et 50 % de boues d'épuration.

Les quantités suivantes s'avèrent également particulièrement bien adaptées pour obtenir un engrais ayant de bonnes caractéristiques, à savoir 30 % de laitier et 70 % de boues d'épuration.

Selon l'invention, l'engrais peut être obtenu de la façon suivante. Le laitier est soumis à une opération de broyage et de concassage pour séparer le métal dudit laitier, lequel est ensuite transformé sous forme de granulés. Les boues d'épuration et le laitier, sous forme de granulés, sont alors acheminés dans un malaxeur pour assurer le mélange et obtenir l'engrais.

Dans une autre forme de réalisation, les produits sont constitués par des poussières de sablerie, dites "à vert", c'est-à-dire par des poussières à base de silice et d'argile.

Les poussières silico-argileuses se présentent sous une forme pulvérulente en ayant une très faible granulométrie. Dans ces conditions, les surfaces spécifiques résultantes présentent un intérêt important en termes d'adsorption et de fixation d'eau par l'argile et par la silice.

Il en résulte qu'en mélangeant une quantité déterminée de ces poussières silico-argileuses avec de la chaux, ces dernières diminuent de façon notoire la consommation de chaux, tout en permettant de donner la siccité suffisante aux boues d'épuration, compte-tenu de l'application en tant qu'engrais agricoles. Il est possible d'obtenir un engrais en mélangeant aux boues d'épuration, les poussières de sablerie dans des proportions de 10 % à 50 % de la quantité de chaux nécessaire.

Ces proportions de mélange de poussières silico-argileuses et de chaux, avec les boues d'épuration, satisfont aux critères de manutention et de qualité nu- tritique des engrais. Comme indiqué précédemment, les boues d'épuration, la chaux et les poussières silico-argileuses sont malaxés au moyen d'un malaxeur pour obtenir la formule désirée.

Les moyens de broyage des laitiers ne sont pas décrits en détail, car il ne font pas partie de l'objet spécifique de l'invention et sont parfaitement connus pour un homme du métier en étant susceptibles de faire l'objet de différentes formes de réalisation. Il en est de même en ce qui concerne les moyens de malaxage des laitiers et des boues d'épuration ou des poussières, de la chaux et des boues d'épuration.

Les avantages ressortent bien de la description, en particulier on souligne et on rappelle la combinaison des boues de stations d'épuration avec des laitiers de fusion ou avec des poussières, qui, à ce jour, sont considérés comme des produits non recyclabes et destinés à la décharge.

## Revendications

-1- Engrais agricole caractérisé en ce qu'il comprend une quantité déterminée de laitier et une quantité déterminée de boues d'épuration.
-2- Engrais selon la revendication 1, caractérisé en ce qu'il comprend une quantité déterminée de poussières de sablerie mélangée à de la chaux et, une quantité déteminée de boues d'épuration.
-3- Engrais selon la revendication 1, caractérisé en ce qu'il comprend 50 % de laitier et 50 % de boues d'épuration.
-4- Engrais selon la revendication 1, caractérisé en ce qu'il comprend 30 % de laitier et 70 % de boues d'épuration.
-5- Engrais selon la revendication 2, caractérisé en ce que les poussières de sablerie sont du type silico-argileuses.
-6- Engrais selon la revendication 2, caractérisé en ce qu'il comprend des poussières silico-argileuses dans des proportions de 10 % à 50 % de la quantité de chaux.
-7- Procédé de préparation de l'engrais selon la revendication 1, caractérisé en ce que l'on soumet le laitier à une opération de broyage et de concassage pour séparer le métal dudit laitier, lequel est ensuite transformé sous forme de granulés.
-8- Procédé de préparation de l'engrais selon la revendication 7, caractérisé en ce que l'on soumet à une opération de malaxage, les boues d'épuration et le laitier sous forme de granulés.
-9- Procédé de préparation de l'engrais selon la revendication 2, caractérisé en ce que l'on soumet à une opération de malaxage, les boues d'épuration, la chaux et les poussières silico-argileuses.
